# EUROPEAN PATENT SPECIFICATION

(11) **EP 1 582 480 B1**
(45) Date of publication and mention of the grant of the patent: **21.02.2007**
(21) Application number: 04380088.7
(22) Date of filing: 19.04.2004
(51) Int. Cl.: B65G 1/02, B65G 1/06, A47B 81/00

(54) **Cask support**
Fassstütze
Support de fût

(30) Priority: 13.11.2003 ES 200302621
(43) Date of publication of application: 05.10.2005
(73) Proprietor: Sagarte S.A., 31830 Lacunza, Navarra (ES)
(72) Inventor: Flores Flores, Sebastián, 31830 Lacunza Navara (ES)
(74) Representative: Maldonado Jordan, Julia

(56) References cited:
- EP-A- 1 036 525
- EP-A- 1 057 735
- EP-A- 1 066 772
- FR-A- 2 777 974
- US-A- 1 739 403

## Description

### OBJECT OF THE INVENTION

The present invention consists of a cask support, especially applicable in large cellars, of those allowing the casks to be accumulated without having to support the weight of those arranged on top of each one of them, given that it is a modular support which is stackable on other identical supports, forming a staggered stacking.

Each cask housed on this support is accommodated on an extractable carriage which has, furthermore, four freely rotatable wheels on which the side surface of the cask rests, allowing the rotation thereof with respect to its axial axis.

### BACKGROUND OF THE INVENTION

In large wine ageing cellars, the casks are piled or stacked in resting position, i.e. with their bases placed according to vertical planes, such that the casks of the lower level rest between pairs of beams parallelly arranged on the ground and suitably wedged in order to prevent their movement.

The next levels of casks are obtained by means of the support thereof, one between another, remaining arranged in a staggered manner, always using wedges, and being stacked up to wherever necessary.

This system of stacking has various drawbacks, such as the difficult accessibility and handling of the casks, the deformation of the casks in the lower levels and the lack of safety in the stability of the casks, given that in the event of a wedge having a fault, a sliding and collapse may occur with the consequent danger for the cellar operators.

In order to solve the aforementioned problems, Spanish Utility Model with publication number ES1040068U, of the same applicant, claims a cask support constituted of a modular structure based on stringers and crossbeams of rectangular configuration, on the corners of which tubular parts have been vertically arranged in order to removably receive the attachment of corresponding vertical columns, whilst these tubular parts rely on hollow conical support legs on their lower end in order to receive, in the stacking with another support, the upper end of the vertical columns of the lower support, determining the modularity of the latter; a pair of longitudinal sections having been provided, forming part of the structure itself, preferably arranged corresponding with the upper edge of the stringers of the structure, in the profiles of which concavities are formed for the stable support of the casks. Furthermore, the structure supports two casks collaterally arranged with one another in a stable manner.

Likewise, the applicant is also the holder of the European Patents with publication numbers EP1057735B1 and EP1066772B1, wherein, with modifications of Utility Model ES1040068U, the cask supports can be assembled together with a considerable lateral displacement, forming a staggered arrangement which provides advantages in terms of facilitating the accessibility and mobility of the casks and a shorter height of the vertical columns or posts.

Finally, the applicant is also the holder of the European Patent with publication number EP1036525B1, claiming a cask support with a base structure, of a rectangular outline with seatings for a pair of laterally adjacent casks, having four wheels with rotational freedom arranged on the end of respective arms suitably integral with the base structure, such that the wheels stabilise and allow the rotation of the casks on their own axis with little effort. In this way, access to the entire surface of the deposited casks and the rotation thereof is facilitated even more than in the European Patents EP1057735B1 and EP1066772B1.

On the other hand, US patent of invention 1,739,403 is known which discloses a support for oil barrels, allowing an arrangement thereof on a fixed structure occupying minimal space, each barrel being supported on a moveable carriage facilitating the assembly and disassembly of the barrel on the structure or shelf, but this support is not suitable for wine aging cellars as it does not allow the precise handling of the casks, specifically, the necessary rotational movement on its own axis for cleaning the casks, taking samples, transferring, etc.

### DESCRIPTION OF THE INVENTION

The present invention refers to a cask support, especially applicable in large cellars, incorporating added advantages to the cask supports existing on the market, by allowing a significant improvement in the access and handling of the cask.

The cask support object of the present invention allows the accumulation of casks without these having to support the weight of those arranged on top of each one of them, given that it is a modular support, conceived mainly to support a pair of collaterally arranged casks, being only the supports, in their staggered stacking, those which support the weight situated above them.

The support consists of two rectangular bedplates to which a prismatic-rectangular angle block is coupled on the lower part of each one of their ends, and a reinforcement support welded to a framework on the upper part of each one of their ends. The framework is made up of two upwardly divergent lower tubes to which the reinforcement supports are welded, which start from the end of each one of the bedplates; the framework also has two upper or end tubes perpendicular to the support plane of the angle blocks, and which have projections on their upper end, whereas their lower ends are welded to the upper ends of the lower divergent tubes.

Each support will be made up of four frameworks such as those described, such that two of these frameworks are in a coplanar arrangement and are fixed to one another through the adjacent upper or end tubes, the other two frameworks being placed on a plane parallel to the aforementioned one, and connected with the first frameworks by means of the bedplate and crossbeams of a considerably shorter length than the axial height of the casks, whereas the slope and length of the divergent tubes of the different frameworks are suitable in order for the spacing between the upper tubes to be suitable to allow the passage of the casks towards their seating area.

A seating is arranged on each bedplate of the support for the housing of a cask, which seating consists of a carriage which can be displaced parallelly to the bedplate and perpendicularly to the vertical plane defined by the frameworks of the support, allowing the casks to be entirely extracted from their support. Furthermore, the carriage has a freely rotatable wheel on each one of its four vertexes, such that the side surface of the cask rests on these wheels, allowing the rotation of the cask with respect to its axial axis with minimum effort.

In this way, operations such as the cleaning of the casks, sampling, carrying out the decanting of the content thereof or the "batonaus" process, are facilitated even more.

### BRIEF DESCRIPTION OF THE DRAWINGS

The following figures are included for the purpose of helping to understand the invention:
Figure 1 shows a perspective view of the cask support.
Figure 2 shows a side view of the bedplate and the carriage displaced with a cask.
Figure 3 shows a lower plan view of an angle block.
Figure 4 shows a front view of an angle block according to the A-B section line in Figure 3.

### PREFERRED EMBODIMENT OF THE INVENTION

A preferred embodiment of the invention, which is to be understood in a broad and non-limiting sense, is detailed below.

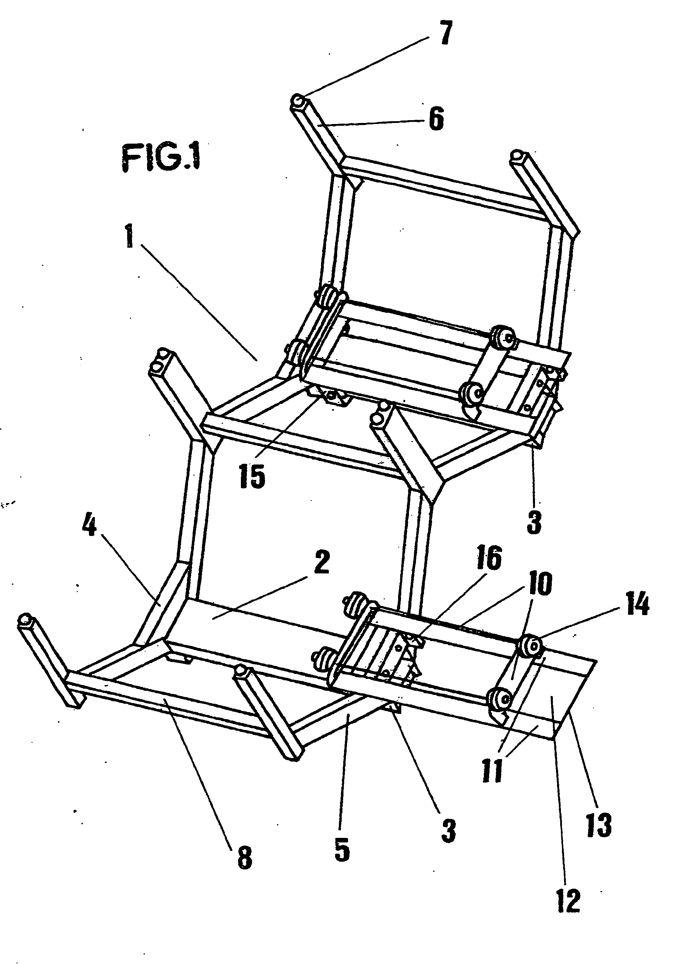

Figure 1 shows a cask support (1), especially applicable in large cellars, and which allows the accumulation of the casks without these having to support the weight of those placed on top of each one of them.

The support (1) consists of two rectangular bedplates (2) formed by a hollow tube of rectangular section, which incorporate a prismatic-rectangular angle block (3) on the lower part of each one of their ends. A reinforcement support (4) is fixed on the upper part of each end of each bedplate (2).

Part of the structure of the support (1) is a framework made up of two upwardly divergent lower tubes (5) to which the reinforcement supports (4) are welded. These two lower tubes (5) start from each end of each one of the two bedplates (2). Furthermore, the framework consists of two upper or end tubes (6) perpendicular to the support plane of the angle blocks (3), and which have rounded projections (7) on their upper end, whereas the lower end of these tubes (6) is welded to the upper end of the lower divergent tubes (5).

Each support (1) will be made up of four frameworks such as the one described, such that two of these frameworks have a coplanar arrangement and are fixed to one another through the adjacent upper tubes (6), the other two frameworks being situated on a vertical plane parallel to the previous one and connected with the first frameworks by means of the bedplate (2) and crossbeams (8) of a considerably shorter length than the axial height of the casks, whilst the slope and length of the divergent tubes (5) are suitable in order for the spacing between the upper tubes (6) to be suitable to allow the passage of the casks towards their seating area.

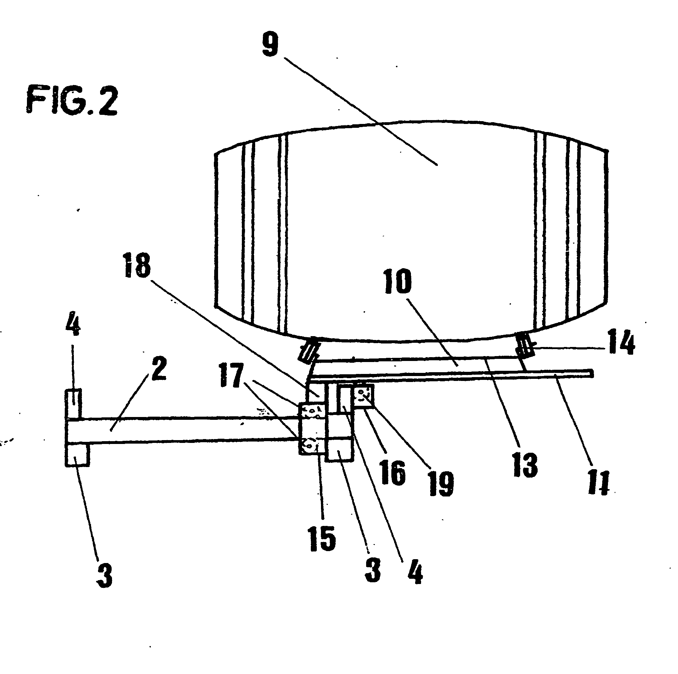

As can be observed in figures 1 and 2, a seating is arranged on each one of the two bedplates (2) of the support (1) for the housing of a cask (9), consisting of a carriage (10) which can be displaced parallelly to the bedplate (2) and perpendicularly to the vertical plane defined by the frameworks of the support, allowing the casks (9) to be entirely extracted from their support (1).

The carriage (10) is constituted of a flat rectangular platform, the major sides of which are defined by two elongated metallic plates (11), with one end projecting from the platform beyond the front vertical plane defined by the lower tubes (5), and which carries out the functions of a handle (12) for the extraction of the carriage (10). The two minor sides of the platform join the ends of the plates (11) and are formed by two metallic rods (13).

A framework of a rectangular structure is arranged on the upper surface of the platform of the carriage (10), the major sides of which framework are shorter than the plates (11).

A freely rotatable wheel (14) rotatable on its own axis is assembled on each one of the four vertices of the framework. The major sides of this framework can be constituted of an elongated shaft shared by two wheels. The side surface of the cask (9) rests on these wheels, allowing the rotation thereof on their own axial axis with minimum effort. The wheels will preferably be manufactured with a material which does not damage the surface of the casks.

The extraction movement of the carriage (10), with a displacement parallel to the bedplate (2), is obtained by means of four mortises (15, 16) or, alternatively, two double mortises.

The first two mortises (15) (only one of them can be seen in Figures 1 and 2) are displaced on the bedplate (2) between two reinforcement supports (4), and each one of them has two overlapping shafts with a vertical wheel (17) on each one of them. Each one of these mortises (15) is fixed to the lower surface of the vertices of the minor side of the platform of the carriage (10) which does not constitute the handle (12) by means of an arm (18), such that the wheel of the upper shaft rests and rolls on the upper surface of the bedplate (2) and the wheel of the lower shaft makes contact with and rolls on the lower surface of the bedplate (2).

Alternatively, these two mortises can be replaced by a single mortise having two elongated shafts inside it, an upper one and a lower one, with a vertical wheel on each end of the two shafts, carrying out the same functions as those previously described.

Two other mortises (16) with a single vertical wheel (19) are fixed on the outer part of the reinforcement support (4) on the side of the handle (12), such that the lower surface of each one of the two plates (11) of the platform of the carriage (10) rests and slides on one of these wheels. Alternatively, this mortise can be replaced by a single mortise having an elongated shaft inside it with a vertical wheel on each end, carrying out the same functions as those previously described.

Since this support (1) allows the rotation of the cask on its own axis and the extraction thereof on its own seating, the logical operations of a cellar such as the cleaning of the casks, sampling, carrying out the decanting of the content thereof or the "batonaus" process, are significantly facilitated.

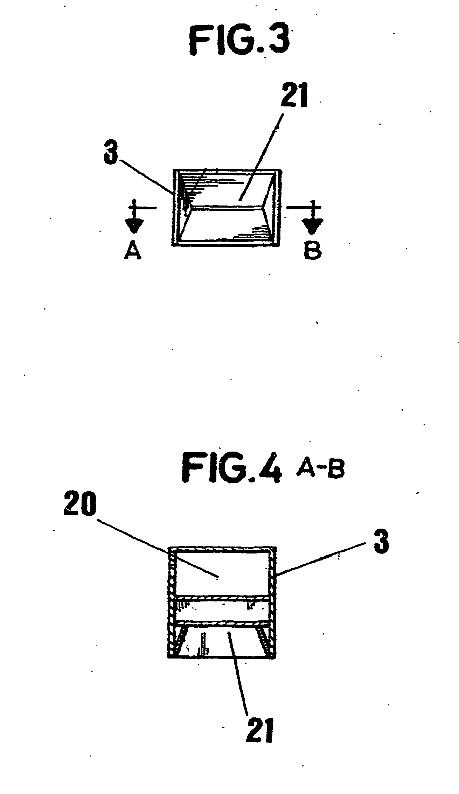

Figures 3 and 4 show one of the four angle blocks (3) of each support (1), preferably prismatic-rectangular, which have a wide hole (20) on their upper level allowing the passage of the arms of a forklift truck or the like, and a receptacle (21) on the lower level, which is open towards its lower side and upwardly convergent, preferably of a pyramidal configuration, said receptacle being intended for receiving inside it a free end with rounded projections (7) of the upper or end tubes (6) in the stacking among supports (1).

## Claims

1. A cask support of the type incorporating a structure allowing the introduction of two casks in the same support, which in the stacking of the identical supports are distributed in staggered formation, each of the parts of the support incorporating a carriage that can move perpendicular to the frontal plane of the support, wherein in each carriage (10) there is a rectangular framework provided with respective pulley wheels (14) in correspondence with its vertexes, assembled with freedom of rotation on corresponding axis, and making up four points of support of the cask on the carriage, allowing the rotational movement of the cask on its own axis

2. A cask support according to claim 1, **characterised in that** the carriage (10) is formed by a flat rectangular platform, the major sides of which are defined by two elongated metallic plates (11), with one end projecting from the platform beyond the vertical plane defined by the frameworks of the support (1). The two minor sides of the platform join the ends of the plates (11) and are formed by two metallic rods (13). On the lower surface of each vertex of the minor side of the platform of the carriage (10) which does not constitute the handle (12), a mortise (15) which can move on the bedplate (2) between two reinforcement supports (4) is fixed by means of an arm (18), and has two overlapping shafts with a vertical wheel (17) on each one of them, such that the wheel of the upper shaft rests on the upper surface of the bedplate (2) and the wheel of the lower shaft makes contact with the lower surface of the bedplate (2). Two mortises (16) with a single vertical wheel (19) are fixed on the outer part of the reinforcement support (4) on the side of the handle (12), such that the lower surface of each one of the two plates (11) of the platform of the carriage (10) rests on one of these wheels (19).

3. A cask support according to any of the previous claims, **characterised in that** a rectangular framework is arranged on the upper surface of the platform of the carriage (10), the major sides of which framework are shorter than the plates (11).

4. A cask support according to the previous claims, **characterised in that** part of the structure of the support (1) is a framework made up of two upwardly divergent lower tubes (5) to which a reinforcement support (4) is welded. These two lower tubes (5) start from each end of each one of the two bedplates (2). Furthermore, the framework consists of two upper or end tubes (6) perpendicular to the support plane of the angle blocks (3), and which have rounded projections (7) on their upper end, whereas the lower end is welded to the upper end of the lower divergent tubes (5). Two of these frameworks adopt a coplanar arrangement and are fixed to one another through the adjacent upper tubes (6), the other two frameworks being situated on a plane parallel to the previous one and connected with the first frameworks by means of the bedplate (2) and crossbeams (8) of a considerably shorter length than the axial height of the casks, whilst the slope and length of the divergent tubes (5) of the different frameworks are suitable in order for the spacing between the upper tubes (6) to be suitable to allow the passage of the casks towards their seating area.

5. A cask support according to the previous claims, **characterised in that** a prismatic-quadrangular angle block is fixed on the lower part of each one of the ends of each bedplate (2), having a wide hole (20) on its upper level, and a receptacle (21) on the lower level which is open towards its lower side and upwardly convergent, preferably of a pyramidal configuration.

## Patentansprüche

1. Fassauflage, der Art, die eine Struktur aufweisen, die es ermöglicht auf einer einzigen Auflage zwei Fässer abzulegen, die beim Stapeln von identischen Auflagen versetzt zu liegen kommen, wobei jedes Teil der Auflage einen Schlitten aufweist, der senkrecht zur vorderen Ebene der Auflage verfahrbar ist, wobei zu jedem Schlitten (10) ein rechteckiges Gestell gehört, das entsprechend seiner Scheitelpunkte jeweils mit Laufrollen (14) versehen ist, die frei drehend auf entsprechenden Achsen montiert sind und die vier Stützpunkte des Fasses auf dem Schlitten bilden, wodurch eine Drehbewegung des Fasses um seine eigene Achse ermöglicht wird.

2. Fassauflage nach Anspruch 1, **dadurch gekennzeichnet, dass** der Schlitten (10) aus einer flachen rechteckigen Plattform besteht, deren längere Seiten durch zwei längliche Metallplatten (11) mit einem in der von den Gestellen der Auflage (1) gebildeten senkrechten Ebene über die Plattform vorstehenden Ende gebildet werden. Die beiden kürzeren Seiten der Plattform verbinden die Enden der Platten (11) und bestehen aus Metallstäbe (13). An der unteren Seite jedes Scheitelpunkts der kürzeren Seite der Plattform des Schlittens (10), die nicht den Griff (12) bildet, wird über einen Arm (18) eine auf der Grundplatte (2) zwischen zwei Stützverstärkungen (4) verfahrbare Auskehlung (15) befestigt, die zwei übereinander gelagerte Achsen mit jeweils einem senkrechten Rad (17) aufweist, so dass sich das Rad der oberen Achse auf der oberen Fläche der Grundplatte (2) abstützt und das Rad der unteren Achse mit der unteren Fläche der Grundplatte (2) in Berührung kommt. Zwei Auskehlungen (16) mit einem einzigen senkrechten Rad (19) werden an der Außenseite der Stützverstärkung (4) auf der Seite des Griffs befestigt, so dass die untere Fläche jeder der zwei Platten (11) der Plattform des Schlitterns (10) auf einem dieser Räder (19) aufliegt.

3. Fassauflage nach einem der vorhergehenden Ansprüche, **dadurch gekennzeichnet, dass** auf der oberen Fläche der Plattform des Schlittens (10) ein rechteckiges Gestell angeordnet wird, dessen längere Seiten kürzer als die Platten (11) sind.

4. Fassauflage nach den vorhergehenden Ansprüche, **dadurch gekennzeichnet, dass** ein Teil der Struktur der Auflage (1) ein Gestell ist, das aus zwei nach oben auseinander laufenden unteren Rohren (5) besteht, an die eine Stützverstärkung (4) angeschweißt wird. Diese beiden unteren Rohre (5) gehen jeweils vom Ende der beiden Grundplatten (2) aus. Zusätzlich besteht das Gestell aus zwei oberen Rohren bzw. Endrohren (6), die senkrecht zur Stützebene der Winkelblock (3) verlaufen und die an ihrem oberen Ende abgerundete Erhebungen (7) aufweisen, während das untere Ende am oberen Ende der unteren auseinander laufenden Rohre (5) angeschweißt wird. Zwei dieser Gestelle kommen in der gleichen Ebene zu liegen und werden über die nebeneinander liegenden oberen Rohre (6) miteinander verbunden, wobei die anderen beiden Gestelle in einer Ebene zu liegen kommen, die parallel zur genannten Ebene verläuft und die über die Grundplatte (2) und über Querträger (8), die wesentlich kürzer sind als die axiale Höhe der Fässer, mit den ersten Gestellen verbunden werden, während die Neigung und die Länge der auseinander laufenden Rohre (5) der verschiedenen Gestelle so angemessen ist, dass der Abstand zwischen den oberen Rohren (6) so angemessen ist, dass er den Durchtritt der Fässer zum Auflagebereich erlaubt.

5. Fassauflage nach den vorhergehenden Ansprüche, **dadurch gekennzeichnet, dass** am unteren Teil jedes der Enden der jeweiligen Grundplatten (2) ein prismatisch quadratischer Winkelblock befestigt wird, der an seiner oberen Ebene eine große Öffnung (20) aufweist und an seiner unteren Ebene ein nach unten geöffnetes Behältnis (21), das nach oben zusammenläuft und das vorzugsweise pyramidenförmig ausgebildet ist.

## Revendications

1. Support pour barriques, du type de ceux qui incorporent une structure permettant l'implantation dans un même supporte d'une paire de barriques, qui dans l'empilage entre ses supports identiques sont distribuées en quinconce, chacune des parties du support incorporant un chariot déplaçable perpendiculairement au plan frontal des supports, dans lequel dans chaque chariot (10) il y a un bâti rectangulaire pourvu des respectives réas (14) en correspondance avec ses sommets, montées avec liberté de rotation sur des axes correspondants, et qui constituent quatre points d'appui de la barrique sur le chariot, en permettant le mouvement giratoire de la barrique sur son propre axe.

2. Support pour barriques selon la revendication 1, **caractérisé en ce que** le chariot (10) est formé par une plate-forme plane et rectangulaire, dont les grands côtés sont définis par deux plaques (11) métalliques allongées, ave une extrémité en vol à faux à partir de la plate-forme au-delà du plan vertical défini par les bâtis du support (1). Les deux petits côtés de la plate-forme unissent les extrémités des plaques (11) et sont formés par deux tringles métalliques (13). Sur la surface inférieure de chaque sommet du petit côté de la plate-forme du chariot (10) qui ne constitue pas l'anse (12) est fixée, au moyen d'un bras (18), une mortaise (15) déplaçable sur le banc (2) entre deux renforts de support (4) et présente deux axes superposés avec une roue verticale (17) sur chacune d'eux, de manière que la roue de l'axe supérieur soit appuyée sur la surface supérieure du banc (2) et la roue de l'axe inférieur fasse contact avec la surface inférieure du banc (2). Deux mortaises (16) avec une seule roue verticale (19) sont fixées sur la partie extérieure du renfort de support (4) du côté de l'anse, de sorte que la surface inférieure de chacune des deux plaques (11) de la plate-forme du chariot (10) soit appuyée sur une de ces roues (19).

3. Support pour barriques selon l'une quelconque des revendications antérieures, **caractérisé en ce que**, sur la surface supérieure de la plate-forme du chariot (10) est disposé un bâti rectangulaire, dont les grands côtés sont plus courts que les plaques (11).

4. Support pour barriques selon des revendications antérieures, **caractérisé en ce qu'**une partie de la structure du support (1) est un bâti composé par deux tubes inférieurs (5) divergents dans le sens ascendant, auxquels est soudé un renfort de support (4). Ces deux tubes inférieurs (5) partent de chaque extrémité de chacun des deux bancs (2). En outre, le bâti comporte deux tubes supérieurs ou d'extrémité (6) perpendiculaires au plan d'appui des blocs d'angle (3), et qui comportent à leur extrémité supérieure des protubérances (7) arrondies, tandis que l'extrémité inférieure est soudée à l'extrémité supérieure des tubes inférieurs divergents (5). Deux de ces bâtis adoptent une disposition coplanaire et ils sont fixés entre eux à travers des tubes supérieurs (6) attenants, les deux autres bâtis étant situés dans un plan parallèle à l'antérieur et mis en rapport avec les premiers au moyen du banc (2) et des traverses (8) de longueur sensiblement inférieure à la cote axiale des barriques, tandis que l'inclinaison et la longueur des tubes divergents (5) des différents bâtis est l'appropriée pour que l'espacement entre les tubes supérieurs (6) soit l'adéquat pour permettre le passage des barriques vers sa zone d'emplacement.

5. Support pour barriques, selon les revendications antérieures, **caractérisé en ce que** la partie inférieure de chacune des extrémités de chaque banc (2) est fixée à un bloc d'angle prismatique-quadrangulaire qui présente sur son niveau supérieur un large orifice (20), et sur son niveau inférieur un réceptacle (21) ouvert vers sa face inférieure et convergente dans le sens ascendant, de préférence de configuration pyramidale.
